# EUROPEAN PATENT SPECIFICATION

(11) **EP 2 487 679 B1**
(45) Date of publication and mention of the grant of the patent: **07.12.2016**
(21) Application number: 12156848.9
(22) Date of filing: 10.10.2006
(51) Int. Cl.: G10L 15/26, G06K 19/077, G06Q 10/06

(54) **A terminal device for voice-directed work and information exchange**
Endgerät für sprachgelenkte Arbeit und Informationsaustausch
Terminal pour travail à système vocal et echange d'informations

(30) Priority: 11.10.2005 US 247291
(43) Date of publication of application: 15.08.2012
(62) Divisional of application: 06816662.8
(73) Proprietor: Vocollect, Inc., Pittsburgh, PA 15235 (US)
(72) Inventor: Logan, James, Randall, Pittsburgh, PA Pennsylvania 15209-2037 (US); Levan, James, Alan, Barrington Hills, IL Illinois 60010 (US); Byford, Roger, Graham, Apollo, PA Pennsylvania 15613-0945 (US); Eusterman, Timothy, Joseph, The Woodlands, TX Texas 77381-6183 (US); Sweeney, Lawrence, R., Bethel Park, PA Pennsylvania 15102 (US)
(74) Representative: Houghton, Mark Phillip

(56) References cited:
- WO-A1-2004/100098
- US-A- 6 078 251
- US-A1- 2004 138 781

## Description

### Background of the Invention

Wearable, mobile and/or portable computer terminals are used for a wide variety of tasks. Such terminals allow the workers using them ("users") to maintain mobility, while providing the worker with desirable computing, data gathering, and data-processing functions. Furthermore, such terminals often provide a communication link to a larger, more centralized computer system. One example of a specific use for a wearable/mobile/portable terminal is a product or warehouse management system that involves product distribution and tracking as well as product inventory management.

Computerized product management systems with portable terminals are used in various inventory/order-based industries, such as food and retail product distribution, manufacturing and quality control, for example. An overall integrated product management system may utilize a central computer system that runs a program for product tracking and management and for order filling. A plurality of mobile terminals are employed by the users of the system to communicate with the central system for the product handling. The users perform manual product picking and placements tasks per instructions through the terminals provided by the central system. The terminals also allow the users to interface with the computer system, such as to respond to inquiries or confirm the completion of certain tasks. Therefore, an overall integrated management system involves a combination of a central computer system for tracking and management, and the people who use and interface with the computer system in the form of order fillers, pickers and other workers. The workers handle the manual aspects of the integrated management system under the command and control of information transmitted from the central computer system to the wireless wearable terminal.

One particularly efficient system is a voice-directed system that utilizes voice-directed work. More specifically, to provide an interface between the central computer system and the workers or other users, such wearable terminals and the central systems to which they are connected are oftentimes voice-driven or speech-driven; i.e., are operated using human speech. A bi-directional communication stream of information is exchanged over a wireless network between the wireless wearable terminals and the central computer system. Information received by each wireless wearable terminal from the central system is translated from text into voice instructions or commands for the corresponding worker. Typically, to communicate in a voice-driven system, the worker wears a headset, which is coupled to a wearable or portable terminal. The headset has a microphone for voice data entry and an ear speaker for receiving audio voice instructions. Through the headset, the workers are able to receive voice instructions about their tasks, ask questions, report the progress of their tasks, and report working conditions, such as inventory shortages, for example.

An illustrative example of a set of worker tasks suitable for a wireless wearable terminal with voice capabilities may involve initially welcoming the worker to the computerized inventory management system and defining a particular task or order, for example, filling a load for a particular truck scheduled to depart from a warehouse. The worker may then answer with a particular area (e.g., freezer) that they will be working in for that order and will then be directed to pick items to fill a pallet or bin used for the order. Specifically, the system vocally directs the worker to a particular aisle and bin to pick a particular quantity of an item. The worker then vocally confirms the location that they have gone to and vocally confirms the number of picked items, and/or various other information about the picked items. Once the bin or pallet is filled, the system may then direct the worker to a loading dock or bay for a particular truck to receive that order. Or, another different pallet or bin might be selected to be filled with additional items for the same or a different order. As may be appreciated, the specific communications exchanged between the wireless wearable terminal and the central computer system for such voice-directed work can be task-specific and highly variable.

The mobile terminals and voice-directed work provide a significant efficiency in the performance of the workers tasks. Specifically, using such terminals, the work is done virtually hands-free without equipment to juggle or paperwork to carry around. But while such voice-driven systems often provide hands-free operations, they also require various verification steps to be taken by the user to ensure accuracy or require additional information about a product that is "picked" or otherwise handled.

For example, such verification steps require the user to read information from the location of the product or from the product itself and to communicate or speak that information to the terminal, which transfers it to the central system. For example, the location of a selected product, often referred to as the product "slot", is usually verified to make sure that the user is in the proper area to pick the products that their individual pick list dictates. It is important to be at the proper slot. Each slot might be identified by a code, typically a two digit code, and the user reads the code and speaks it or "says" it into their terminal. If they are in the wrong location, the central system will inform them so that they can correctly proceed with an order.

One drawback not addressed by some current product management systems is that verification procedures can be bypassed by the worker. For example, the location or slot codes can be memorized by the workers or terminal users such that they can give a slot code to the system even though they are not truly at the location to verify. This leads to inaccuracies and thus the slot codes often must be periodically changed to prevent such an issue.

In addition to verification, other information, such as product information, might be desired by the system. The user might read the information from the product or container and then speak the information into their terminal. For example, the user may read a product code from a product package or box and speak that to the terminal for verification that the right product is being picked. Alternatively, the particular pallet or other container holding the product may have a code or license associated therewith, which is verified to the central system by the user. The country of origin code is also often spoken by the user for a picked product. Therefore, while the current voice-directed systems and terminals allow for hands free operation and user, they still require that the user read and repeat various other information associated with the product that is picked or selected for an order. Therefore, the process might be further slowed down while the user reads and speaks the additional information, and there are further chances for inaccuracy in the process because of all of the spoken information.

Other data capture devices, such as optical scanners (e.g., bar code scanners) or radio frequency identification tag (RFID) readers, might be used with a terminal to capture additional information. However, such scanners and readers are generally manually operated and thus require a user keep at least one hand available for holding and operating the scanner/reader. Not only does this prevent the user from using both hands to handle product, but it also adds additional steps to the work process or task. As may be appreciated, this slows down the voice-directed work significantly. Furthermore, the user has more equipment to manage with separate scanner/readers and the facility owner has more equipment to replace and maintain for each terminal. Ultimately, all of these factors lead to greater overall costs for the distribution or warehouse facility.

An additional drawback with existing systems is that to control inventory, the product slots require periodic product counting or cycle counts to verify the amount of product still left in the slot. While the central system provides some tracking of product that has been picked and must be replenished, periodic cycle counts are still often done manually. Consequently, this amounts to additional time and cost in managing a product distribution facility and system.

Accordingly, there is a need, unmet by current communication systems, to improve the efficiency and accuracy in directed work, environments, and particularly voice-directed work environments. There is further a need to provide improvements in product inventory management and product handling systems. There is further a need to provide reliable input and verification of spoken information used in such systems to ensure proper task completion. There is still a further need to improve the speed and accuracy of data and information capture scenarios within a voice-directed work environment and to improve the efficiency and cost-effectiveness of handling product using voice.

US2004/0138781 discloses a method for objects selection at a location comprising the steps of using a mobile computer having a bar code reader, a display, an audio output device, an audio input device, a tactile input device, text to speech software, a voice recognition software, objects selection applications software, and radio frequency identification (RFID) reader, wherein said mobile computer is adapted for communication between an order systems server and a user and the order systems server is adapted for communication between the mobile computer and at least one external computer system.

US 6078251 discloses an apparatus for object identification including a multimeter terminal having a plurality of data modules, a triggering device for initiating one of the plurality of data modules to retrieve object identification data from an object, a radio module for downloading the retrieved object identification data to a host and a housing containing the data modules, triggering device and the radio module.

The present invention provides a system and a method in accordance with the claims.

### Brief Description of the Drawings

The accompanying drawings, which are incorporated in and constitute a part of this specification, illustrate embodiments of the invention and, together with a general description of the invention given above and the detailed description given below, serve to explain the invention.
Figure 1 is a perspective view of a worker using a terminal in accordance with the present invention.
Figure 2 is a schematic block diagram of a system incorporating the present invention.
Figure 3 is a schematic diagram of one embodiment of the invention.
Figure 4 is a schematic diagram of another embodiment of the invention.
Figures 5A and 5B are flowcharts illustrating one embodiment of the present invention utilized in an ITEM PICKING context.
Figure 6 is a flowchart illustrating one embodiment of the present invention utilized in a REPLENISHMENT context.
Figures 7A and 7B are flowcharts illustrating one embodiment of the present invention utilized in a PUT AWAY context.
Figure 8 is a schematic block diagram of another embodiment of the present invention.
Figure 9 is a schematic block diagram of another embodiment of the present invention.

### Detailed Description of Embodiments of the Invention

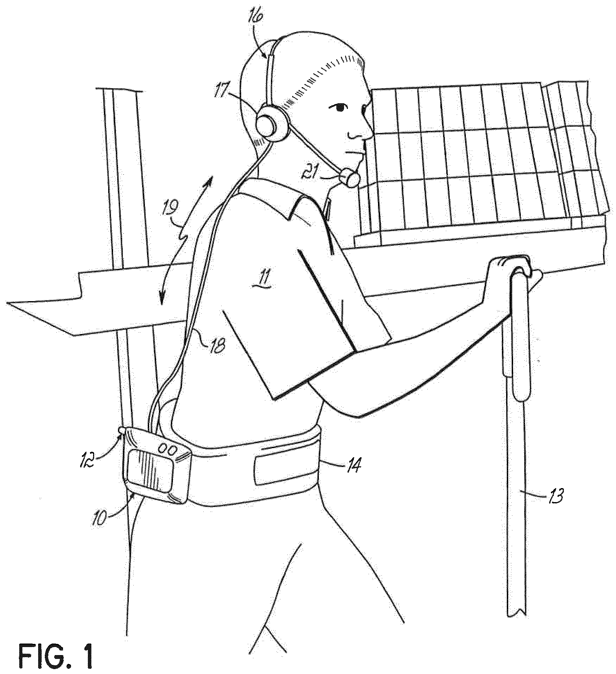

Referring to Figure 1, there is shown, in use, an apparatus or device suitable for a voice-directed work environment, including a portable and/or wearable terminal device 10 and headset 16, which apparatus incorporates an embodiment of the present invention. The portable terminal device 10 may be a wearable device, which may be worn by a worker 11 or other user or operator (hereinafter generally "the user"), such as on a belt 14 as shown. This allows hands-free use of the terminal. The user 11 is shown operating a piece of transportation equipment 13, such as a pallet jack. The portable terminal 10 might also be manually carried or otherwise transported on a piece of equipment, such as on a pallet jack or lift truck. The wireless features of the invention allow greater flexibility with respect to the portable terminal. The use of the term "terminal" herein is not limited and may include any computer, device, machine, combination or system, which incorporates the various aspects of the invention. Furthermore, the terminal device or terminal 10 may include multiple pieces with separate housings or may be contained in a single housing similar to the embodiment shown in Figure 1. Therefore, the terminal may also include multiple wearable pieces as described below. Alternatively, some or all of the terminal functionality in accordance with the invention might be incorporated into the headset, which may include all the features to communicate with a central computer instead of using a belt-worn terminal as shown. Therefore, the exact form of the terminal device utilized to practice the invention is not limited to only the embodiments showing in the drawings.

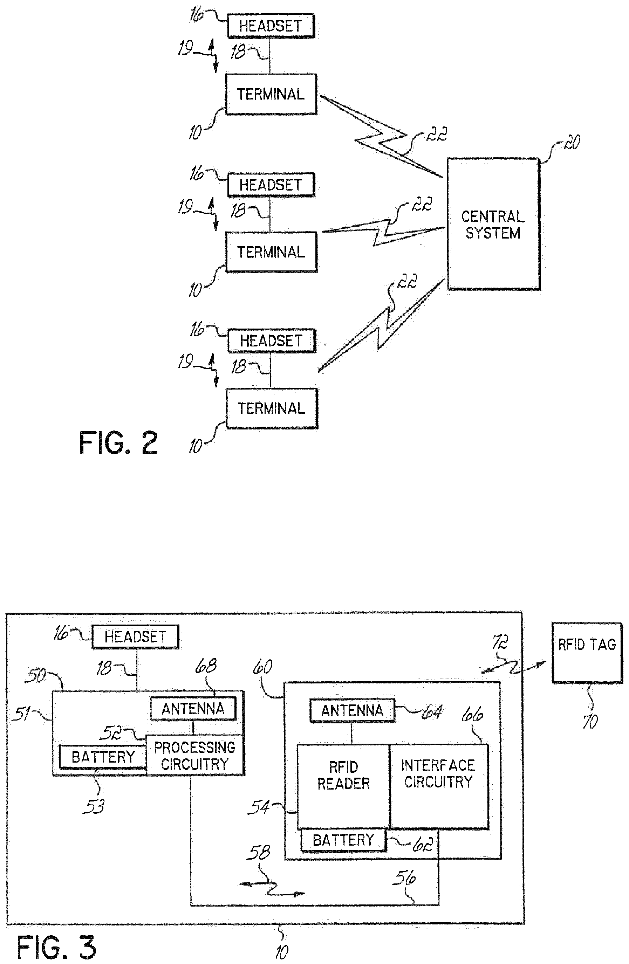

The terminal device 10 operates in a voice-driven system and includes speech interfaces to permit a variety of users 11 to communicate, using speech or voice, with one or more central systems or central computers (see Figure 2), which are part of a larger system for sending and receiving information regarding the activities and tasks to be performed by the worker or for exchanging other information with the terminals associated with voice-directed tasks. The workers move around in a warehouse, storage area or some other facility. The central computer or central processor (central system) 20, and its component parts, may run one or more system software packages for handling a particular task or set of tasks, such as inventory and warehouse management systems (which are available in various commercial forms), or any other systems where multiple tasks or products are handled by multiple workers. The block for central system 20 is used to designate any of a variety of different computers and/or servers and/or databases and/or systems necessary to interface with multiple terminals and workers, provide the work tasks and teach the products or other items handled in the voice-directed work environment. The central computer may include a computer running a Warehouse Management System (WMS), a database and server, or a server running a Web application. Additionally, the central system 20 might also include a computer or server for programming and managing the individual terminal devices 10. Therefore, the central system 20 is not limited in scope to a specific set-up.

Of course, the terminals 10 may be stand-alone devices as well, which utilize the invention to interface directly with a user without a central system. Therefore, various aspects of the invention might be handled with terminals only and without a central system. Usually, however, to have sufficient database capability to handle large amounts of information, a central system and its components are desirable.

In one example embodiment, terminal device or terminal 10 communicates with central system 20 or a plurality of computers/servers, using a wireless communications link 22. The wireless link may be through an appropriate wireless communication format (e.g., 802.11b/g) and may use one or more wireless access points (not shown) that are coupled to the central computer or system 20 and accessed by the terminals 10. To allow the user to communicate with the system, one or more peripheral devices or peripherals, such as headsets 16, are coupled to the terminals 10 either with a cord 18 or by a wireless connection 19. The headset 16 is worn on the head of the user/worker and uses a microphone 21 for directing voice responses to the terminal. A headset speaker 17 provides voice commands to the worker. The terminal thus carries on a speech dialog with a user and provides hands-free operation and voice-directed movement throughout a warehouse or other facility. The central system sends specific work or task data to the terminals 10. The terminals 10 then use the data to generate audio outputs at the headsets and speakers. For example, text data is converted using a text-to-speech (TTS) interface to provide voice direction to a user. Speech input or feedback from a user/worker is generated at the headset microphone 21 and transmitted to the terminal where it is processed by speech recognition circuitry or other speech processing circuitry. Any data that is obtained from the voice dialog may then be relayed to the central system 20 as necessary.

Specifically, one embodiment of the terminal 10 for communicating with a central system 20 comprises processing hardware and software, which may include a processor for controlling the operation of the terminal and other associated processing circuitry and software, such as task files for controlling the voice dialog, voice templates for the user and a TTS application, for example. The processing circuitry will also incorporate audio processing hardware/software for speech or voice recognition, such as audio filters and correlation applications associated with speech recognition, communications hardware/software, as well as possible RFID capabilities, as discussed below. One suitable terminal for implementing the present invention is the Talkman® T2 product available from Vocollect of Pittsburgh, Pennsylvania, the present assignee of this application. In accordance with one aspect of the present invention, the terminal 10 is used in a voice-driven system, which uses speech recognition technology for communication between the worker and the central system. The headset 16 provides hands-free, two-way voice communication between the worker 11 and the terminal 10, and ultimately central system 20.

For example, in one typical voice-directed system, the terminal 10 receives instructions from the central system 20 and converts those instructions to an audio dialog to be heard by a worker/user 11 on speaker 17. The user executes the audio instructions and, for example, goes to a designated location and picks a designated product or performs some other task. The user 11 then replies in the microphone 21, in a spoken language, such as with a verification of a location and/or a product, and the audio reply is converted to a useable data format to be sent back and processed by the central system. That is, in the voice-directed or speech-directed work context, the user maintains a speech dialog with the terminal and/or central system in order to execute and complete a variety of tasks.

The present invention enhances the voice-directed work context and specifically provides an integration of RFID-obtained information into the speech dialog. In some embodiments, as discussed, the integration of RFID information and speech is driven by the speech context, and the RFID information is obtained automatically or by direction to the user based on the context (i.e., it is "context-driven"). In other embodiments, an RFID tag acts as a "talking tags™" that "talks to the user. The talking tag and the RFID information initiates a speech dialog or supplements an ongoing speech dialog to direct the user in a specific tasks(s). Furthermore, the present invention addresses drawbacks in the prior art by providing enhanced efficiency in a product and inventory-handling scheme, as well as in productivity of the worker. Of course, it will be readily understood by a person of ordinary skill in the art that the invention has application beyond product handling. It is useful for other information exchange and gathering applications, as well. Therefore, product handling is discussed herein as one application for the invention.

In inventory management, large amounts of products are stored and handled in a facility, such as a warehouse. The location of product is often referred to as a "slot." However, the location could be a bin, an aisle, a room, a pallet or any other location in which the user works or is directed. In the present application, the term "slot" will be used generally as a location designation.

Figure 3 illustrates one exemplary embodiment of the invention in accordance with the principles of the present invention wherein the wearable terminal device or terminal 10 generally includes speech interface circuitry 50 with processing circuitry 52 directed to running a voice-directed work application and maintaining a speech dialog between a user and the terminal 10, or a central system 20, to perform specific tasks associated with voice-directed work. In the embodiment illustrated in Figure 3, the terminal device 10 might incorporate a standard, stand-alone speech-driven terminal, along with an appropriate headset 16 to provide the speech interface. For example, the interface circuitry 50 could be in a portable terminal that is worn by the user, as are known in the art, such as the Talkman® product noted above. Terminal 10 also includes an RFID reader 54 that is operably coupled with the speech interface circuitry 50 and its associated processing circuitry 52. The terminal 10 of the invention includes speech interface circuitry 50 and portable RFID reader circuitry 54 operably coupled together for providing the features of the invention.

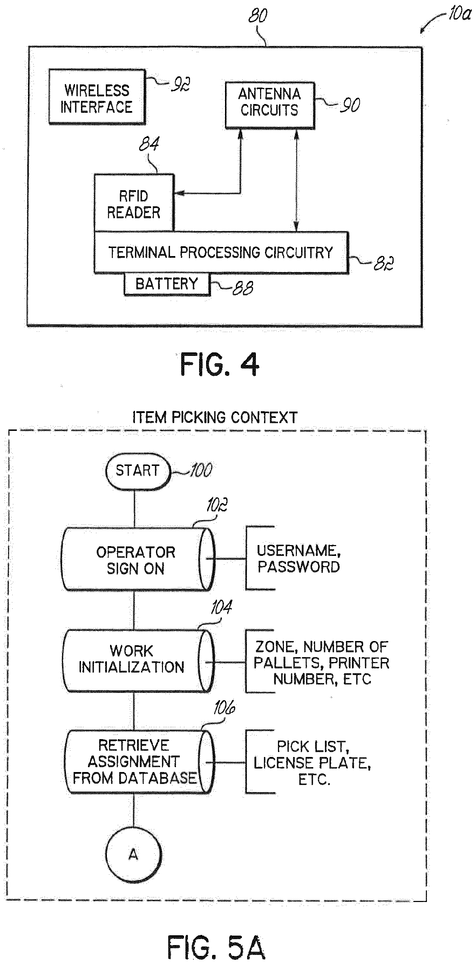

The RFID reader 54 or RFID reader circuitry might be incorporated into the same housing as the speech interface circuitry 50 (see terminal 10A of Figure 4) or may exist in a separate portable and wearable housing 60, as shown in Figure 3. In the embodiment of Figure 3, the multiple components 50, 54 of overall terminal 10 are in separate housings 51, 60. A separate housing 60 for the RFID reader would include a power supply, such as battery 62, an appropriate RF antenna or antenna circuit 64, and interface circuitry 66 for interfacing the RFID reader 54 with speech interface 50. The speech interface circuitry 50 of the speech terminal would have its own power supply 53. The operable interface between the RFID reader 54 and speech interface 50 may be via a wired connection 56 or a wireless connection 58. Appropriate data connections 56 to provide the interoperability of the speech interface 50 and the RFID reader 54 may be any suitable connection as would be understood by a person of ordinary skill in the art. Similarly, an appropriate wireless connection 58 might be utilized for the operable coupling between the interface 50 and the RFID reader 54. In any case, the speech and RFID capability may be handled in separate terminals or the same terminal. If the RFID reader is a separate device or housing, it is desirable, although not necessary, that it also be portable (possibly wearable) to be carried or worn by the user. Of course, the RFID reader 54 might be in some other environment, rather than being worn/carried by the worker. For various examples set forth herein, the RFID reader is indicated as wearable or portable. However, the invention is not limited only to a wearable/portable RFID reader.

The present invention provides a combination of voice capabilities for directing a worker and receiving verbal feedback in the speech dialog and RFID information to provide additional information in the speech dialog or to control or support that dialog. The device 10 provides a completely hands-free and eyes-free environment for voice-directed work, such as product handling, tracking, and verification. In that way, the system is completely hands-free and eyes-free, thus increasing efficiency and productivity.

In accordance with one aspect of the present invention, the terminal 10, in addition to facilitating a speech dialog, collects additional information via the RFID reader from one or more RFID tags 70. The RFID tags are located on various objects or in various locations to provide the desired identification, tracking, and verification aspects of the invention. The present invention may be utilized to identify and track people, products and equipment, and to thereby improve efficiencies in product handling systems as well as other systems. It may also be utilized so that the products being handled control their own handling through a speech dialog with the handler/user (i.e., a "talking tag™").

For example, the RFID tag might be located at a particular slot or bin associated with an item to be picked or otherwise handled and processed by the user. The RFID tag is read as part of the speech context to obtain additional information or to verify spoken information. In another example, the RFID tag may be associated with a product or item itself or on product packaging. The RFID tag contains information that is used to direct a handler, with speech, in the way that the product is to be handled. That is, the tag "talks" to the handler. In still another example, equipment handled by users may include an RFID tag to provide information to a user or otherwise direct the user.

In one possible use of the invention, the user is directed by speech commands, through terminal 10 and headset 16, to travel to a particular bin or slot (i.e., location) that contains an item to be picked and further processed. The location of the bin or slot has an RFID tag 70 associated with it that indicates the information regarding the location, such as the bin number or the slot number. The wearable RFID reader 54 of terminal device 10 through antenna 64 and other appropriate processing circuitry, reads the information or data from tag 70 via interface 72, which is typically an RF wireless interface as is known in RFID applications. The RFID reader then generates an output that is associated with the information/data read from tag 70. The output from a slot tag 70 contains the information associated with the location of the slot. The proximity of the worker-worn reader indicates that the worker is at the slot. The information obtained by the RFID reader as an output is then directed to the processing circuitry 52 via the RFID reader interface circuitry 66 and an appropriate link 56, 58. Terminal 10 further processes the information from the RFID tag to determine if the user is at the correct location. The terminal 10 may send the RFID information on to the central system or central computer 20, such as via the antenna 68 and a wireless link, as illustrated in Figure 2. The processing circuitry 52 to handle the RFID information may be the same circuitry as used to provide the speech dialog 50 or separate processing circuitry might be used for the RFID information. The exact structure of the processing circuitry 52 is therefore not limited.

In that way, the terminal system 50 of the present invention can provide a hands-free, eyes-free verification of the location of the worker, so that the central system can verify that the worker is in the right location and, therefore, can pick the right item from the designated slot or bin. Therefore, the RFID tag data may contain information that is related to the activity of the user, which can then be utilized to verify that activity of the user to improve the overall accuracy and efficiency of the system. The verification is both hands-free and eyes-free and does not require any specific input from the worker. Of course, it may be desirable to couple such verification with a spoken indication of a slot number, check digits or other location information from the worker, which can then be compared to the information from the RFID tag that is read by terminal 10 to validate the speech input in accordance with the principles of the present invention.

By providing hands-free and eyes-free information capture, and verification/validation for the system, the accuracy and efficiency of the process are enhanced without the user having to focus on finding the information, such as the information location check digits, bin, or slot where they are located, reading those check digits, and then speaking the information in the speech dialog. Furthermore, the present invention enhances system and order accuracy. In one example, it prevents the worker from memorizing the location information, such as location check digits, and then responding to the system with the spoken information, even though they are not actually located at the directed location. In another example, information that might be misread, misspoken, or misrecognized in the speech dialog is instead captured by an RFID read.

While worker location and product picking verification is one aspect of the present invention, another significant aspect of the invention is the ability to obtain additional information, in a speech dialog, without an interruption of the voice-directed workflow. The RFID reader 54 reads tags 70 and obtains information related to the activity of the terminal user or worker, based upon the context of the speech dialog in which the user is engaged. The RFID circuitry of terminal 10 obtains information automatically or otherwise in certain stages of the speech dialog. That activity information may be product information regarding the products or the material that is being handled by the worker. Such information allows the central system 20 to identify and verify the product without voice input by the worker. Of course, the RFID data may be used to verify spoken input. Again, the invention provides a hands-free and eyes-free way to further identify the items being handled by the worker, and also to obtain additional information about those items. In another aspect, voice may be used to provide additional information about the product or to verify/validate the RFID information. That is, the speech information and the RFID tag information may supplement or complement each other. Alternatively, one of the speech information or RFID tag information may be used to validate the other.

In still another aspect, the RFID tag information is linked to a speech dialog associated with the item or location on which the tag is found. The terminal reads the RFID tag and engages a user with a voice dialog associated with the tag data. That is, the RFID tag information starts or varies a speech dialog, in a selective manner, to direct a worker to perform a task.

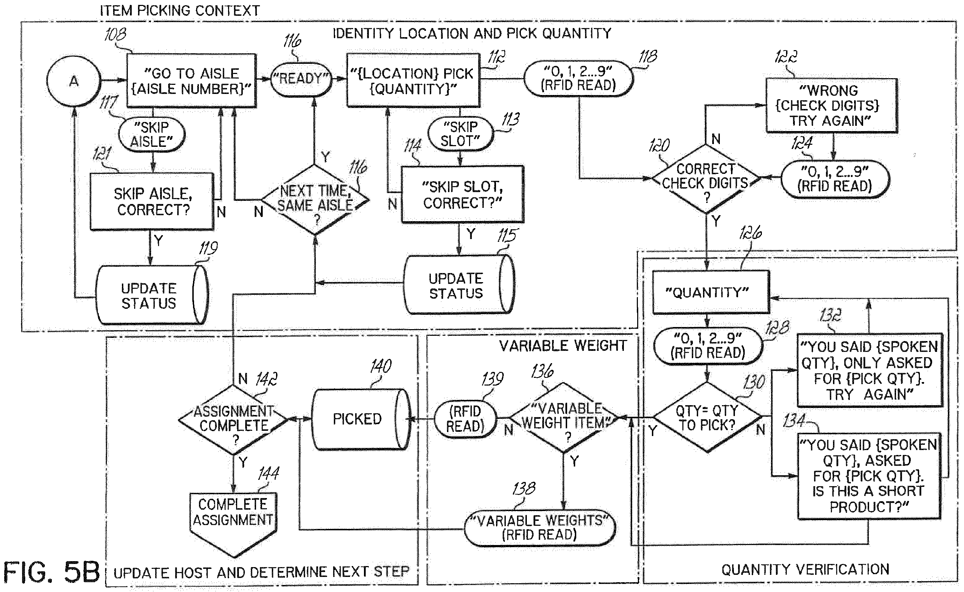

Various examples are helpful in explaining the invention and its advantages and embodiments. Figures 5A and 5B illustrate a voice-directed work scenario in accordance with the present invention utilizing a context- driven RFID capture, such as an RFID read, of information associated with the voice-directed work. Specifically, Figures 5A and 5B illustrate an item picking context wherein one or more items are gathered or "picked" as part of an order and placed onto an appropriate pallet or in a tote box or other container for moving the product to its ultimate shipping destination. For example, voice-directed work is often utilized in a warehouse scenario wherein various different items are stocked or stored in a warehouse and are subsequently picked for individual orders and individual customers by a multitude of workers. After an order is completed, such as on a pallet or tote filled with items, the container is delivered to a destination for further shipping, such as to a door or bay in the warehouse to be loaded onto a truck.

Turning to Figure 5A, the item-picking context starts at step or Block 100. A device utilized by a worker, such as a portable terminal 10 which may be worn by the worker or secured on a piece of machinery such as a forklift or pallet jack, is initialized so that the terminal 10 or other device is made operable to direct the user with speech to perform a variety of tasks (i.e., voice-directed work). The user or operator signs onto the terminal (Block 102), such as with the user name and password. Then the first level of work initialization for the terminal is made (Block 104). For example, the specific zone in the warehouse is programmed, as well as number of pallets which will be necessary and also other information about equipment utilized, such as the number of any printers to be used etc. Next, the additional level of work initialization is made (Block 106) where the terminal 10 retrieves specific work assignment for the user from a central system database. A specific list of items to be picked ("pick list") is provided to the terminal as well as the license plate numbers to identify specific pallets, totes or other containers. Additional information might also be provided to the terminal associated with the voice-directed work assignment for that terminal/user. Once the initialization of the terminal 10 has occurred, the terminal is operable to direct the user in the item-picking context to pick various items for an order.

Referring to Figure 5B along the flow provided by connector blocks (A) the user is told by the terminal of a speech dialog to proceed to a specific aisle in the warehouse as indicated by Block 108. The user answers that they are "Ready" (Block 110), and the terminal tells the user to pick a certain quantity of item at that location in the aisle by speaking the location, such as a slot number, and also the quantity to be picked (Block 112). As noted above, the interface back and forth between the user and the terminal/central system is handled via a speech dialog in accordance with the invention. If desired, the user can skip the slot (Block 113), which is verified by the terminal (Block 114). If the slot is skipped, the terminal central system is updated (Block 115). Through (Block 116), the user may stay in the same aisle and go to another slot or might proceed to a different aisle. Similarly, a worker can skip a specific aisle (Block 117) and the terminal 10 or central system may be updated (Block 119) and the aisle skipped (Block 121).

If the user is at the proper aisle and is picking the directed quantity (Block 112) the user must verify the location where they are picking, such as the slot number. To that end, the user may speak several numerical check digits (Block 118). In accordance with one aspect of the present invention, the terminal 10, which has RFID reader capabilities, understands the context of the speech dialog and provides or initiates an automatic RFID Read as indicated at Block 118. That is, the RFID Reader 54, 84 will read an RFID tag 70 that contains such information as the check digits at the slot location. In one aspect of the present invention, the context speech-driven RFID Read happens automatically due to the speech context of the voice-directed work. That is, the terminal knows when to initiate the Read based on how far along the user has progressed in the speech dialog. The read RFID information may be utilized to verify the spoken check digits. The RFID information might be used directly or the terminal may interface with the central system to match the RFID information with check digit information. Alternatively, in another aspect of the present invention, the user may not even be required to speak the check digits. Rather, the context-driven RFID Read capabilities of the invention are able to capture the check digits and thereby provide a direct determination of the location without input from the user due to the terminal "understanding" the context of the speech dialog. This provides a significant advantage by not allowing users to memorize check digits for certain slots. The check digits are then tested (Block 120). If the check digits are wrong in either a spoken form or an RFID read form, the user may be again prompted to provide the check digits (Block 122). As noted in (Block124), the check digits may than again be spoken and/or obtained through a context-driven RFID read. In accordance with the invention, the terminal understands the context of the speech dialog and knows when to operate the RFID reader to make a context-driven read. Of course, if the invention is configured to not require a spoken response, the RFID read may just be made automatically according to (Block 124). This may continue until the system verifies the user is at the proper location based upon the check digit information associated with that location whether it was spoken or RFID read or both.

Additional information about the voice-directed work may be obtained utilizing the present invention wherein the RFID read is made automatically based upon the context of the speech dialog. Referring again to Figure 5B, once the proper the terminal may ask the user to speak the quantity of the item that is picked (Block 126). In such a context, the invention may again know that the additional information should be obtained or captured such as information regarding the products picked, through a context driven RFID Read. In Block 128 the quantity picked might be spoken by the user. An RFID Read may also automatically occur due to the context. As noted above, the RFID read may be used to verify the spoken quantity. Alternatively, no spoken quantity may be required, but rather the RFID Read may provide the quantity detail associated with the pick, thereby eliminating the need for a portion of the speech dialog. Again, this creates a timesaving for the user. The quantity data, whether spoken or obtained from the RFID Read, or both, is then verified (Block 130). In the speech dialog, if the quantity picked by the user is greater than that quantity which is to be picked, the user might be prompted to pick the right quantity (Block 132). Alternatively, according to (Block 134), the terminal may verify that the product is "short" (i.e., there is not enough of the product in the slot for the pick order). The speech dialog and/or context-driven RFID Reads occur until the terminal or system is satisfied regarding quantity. Again, the terminal understands the context and knows when to perform a read.

Additional product detail may also be captured in the speech-context driven RFID read capabilities of the invention. In one scenario, the items picked may have variable weights. For example, in a food application, meat may be an item that is picked by the pound. To that extent, in Block 136, the terminal may determine if the picked item is a variable weight item. If it is, the user may speak the variable weights that are picked, the terminal may do a context driven RFID Read, or both as indicated (Block 138). Any context-driven Read could verify the spoken information in the speed context or the Read might obtain the information, and speech may or may not be used to verify the read. Again, the terminal of the invention monitors the speech dialog and knows the proper context to initiate the RFID Read.

At the same time, the RFID Read may capture other information regarding the product. To that end, the product may contain its own RFID tag, which contains information associated with other attributes. For example, the tag may contain information regarding a lot code, a date code, a serial number, a country of origin, etc. that the present invention automatically obtains based upon the context of the speech dialog. Again, as noted above, (Block 138) may have the user speak the variable weight or other information, and may utilize the context-driven RFID Read to verify the information. Alternatively, there may be no necessity for the user to speak, as the context- driven RFID Read captures all the necessary information. If the item is not a variable weight item, an RFID Read might still be made (Block 139). Therefore, such information may be automatically captured according to the invention even though the item is not a variable weight item.

It is readily understood that the present invention provides a significant improvement over the prior art and may significantly reduce the speech dialog in capturing necessary information about the product picked. This significantly speeds up the work and will allow the user to concentrate on specific tasks and obtaining other information or to otherwise direct their mental efforts, such as to paying attention to specific environments should they be driving a vehicle, such as a forklift. Therefore, not only does the present invention save time and thus increase the efficiency and cost effectiveness of a worker, but also makes the worker more safe within the work environment. After the necessary information is obtained regarding the items picked, the terminal may store the information and or provide it to the central system 20 via the terminal (Block 140).

The voice directed work and the context driven RFID read may continue for other items provided at (Block 142) if the pick assignment is not complete. If the assignment is complete, the user may be directed (Block 144) to deliver the pallet or tote to a particular location, such as the door of a warehouse or a specific truck. There may be other voice direction, such as to print specific pallet or tote labels. The user might then continue with another work task, or may sign off.

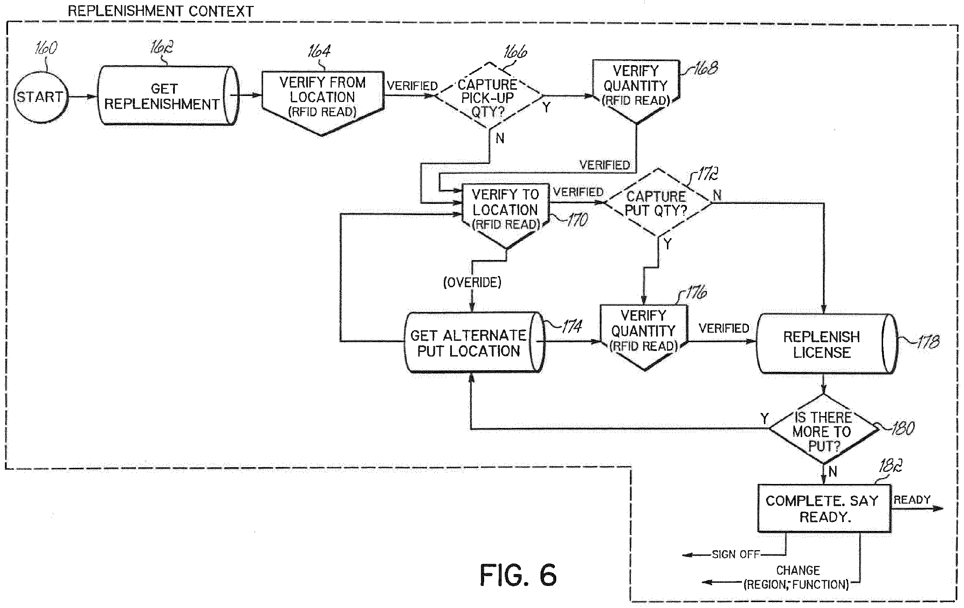

Figure 6 illustrates another task in a voice-directed work environment utilizing the context-driven RFID Read of the present invention. Specifically, Figure 6 illustrates a Replenishment task, which is a function whereby various pick locations, such as warehouse slots, are refilled with product from some other storage or bulk location. That is, the slots are replenished.

Referring to Figure 6, the Replenishment task starts at Block 160. Through an interface with the central system, (such as a warehouse database) the user, specifically terminal 10, may get replenishment directions, as indicated in Block 162. Thereafter, the user verifies the "from" location as indicated by Block 164. The "from" location is that location where the items for replenishment are obtained. In one aspect of the invention, as part of the verification of the "from" location (Block 164) a context-driven RFID Read is made of information associated with the "from" location. For example, if the items to be replenished are located on a shelf or at a bay of a bulk storage area, the shelf/bay may include an RFID tag that has information regarding the shelf/bay location. Such information is read according to the principles of the present invention and utilized to verify the location from which the user obtains the products to be replenished. As noted above, the location information might be spoken, read, or both. Alternatively, there may be multiple containers, such as pallets, at the specific location or shelf. To that end, the context-driven RFID Read may also obtain not only the specific location, but also the specific pallet or other container, if there are multiple pallets.

Once the "from" location has been verified, a decision may be made with respect to a specific quantity of items at the "from" location that are to be selected and moved to the replenishment location. If a specific quantity is to be picked up (Block 166), the quantity is verified via Block 168, such as with a context-driven RFID Read. In the Replenishment context, the invention knows that when verifying the quantity, it initiates an RFID read to obtain the quantity of items, which are on the pallet or in the container to be moved. For example, as discussed below, half of the quantity might go to one replenishment location while another half might go to another replenishment location. Therefore, it is desirable to verify the quantity that is being handled and that is to be replenished. Additionally, the context-driven RFID Read in Block 168 may also verify or capture additional data. For example, a lot code for the replenished items might be determined as well as a date code or expiration date. Also, information such as serial numbers and countries of origin might also be determined from the context-driven RFID Read of Block 168. In accordance with the invention, the RFID Read occurs within the proper point in the speech dialog as determined by the terminal/central system.

As may be appreciated the tests or inquiry of Block 166 with respect to capturing additional information about the items to be replenished may be tailored accordingly based upon what information is to be obtained though the context-driven read. Therefore, it does not just have to be a capture of the pick-up quantity. If no additional information regarding replenished items is necessary, flow proceeds to Block 170. Whether additional information is captured or not captured in Blocks 166, 168, flow will be directed to Block 170 which verifies the "to" location via a context-driven read. The "to" location is the final destination for the replenished items that may be, for example, a bin or slot for which replenishment is to occur. As noted above with respect to Figures 5A and 5B, the context-driven RFID Reads may be accompanied by or used in conjunction with speech dialog. For example, if the pickup quantity is to be obtained as indicated in Block 166, verify quantity routine (Block 168) might be utilized to verify, with speech, the pick-up quantity. The spoken information is then validated with a context-driven RFID read. Alternatively, just a read with no speech may be used to capture information.

If the "to" location is not suitable, an override might be utilized as indicated in Figure 6 and an alternate "put" location or "to" location might be obtained, from the central system via Block 174.

Once the "to" location is determined to be proper, additional information might be obtained regarding the items that are replenished in a specific location. According to Block 172, a decision is made whether additional information is to be captured, such as the quantity of items that will be "put" or replenished at that "to" location. To that end, the quantity or other information might be captured and/or verified with the context-driven RFID read of the invention as illustrated in Block 176. Whether additional information is captured or not, the central system, such as a warehouse database, is updated (Block 178).

The speech dialog may also determine if there is more items to put into an alternate location (Block 180). If there is, an alternate "put" or replenishment location is obtained (Block 174) in view of the loop in Figure 6, Replenishment continues until it is complete and all items are replenished. For example, the pallet, which was originally selected through Block 164, may contain 60 items, and 40 of those items may be put or replenished in an original location leaving, 20 to be replenished somewhere else. Once the alternate put location is obtained Block 174 the remaining items are replenished. If replenishment is complete as indicated by Block 182, the user might get the next replenishment instructions such as by indicating "ready". Alternatively, the user may change their work area/region or function such as to go to a different area of the warehouse, and begin a different task, such as a pick task. Alternatively, the user can quit by signing off. As such, the context-driven RFID Read capabilities of the terminal of the present invention provides the ability to do voice-directed work and obtain additional information for verification, validation and other purposes utilizing context-driven RFID Reads. The speech dialog for obtaining the task information may be reduced, thus speeding up the overall process while processing the same amount of information or even more information during the task.

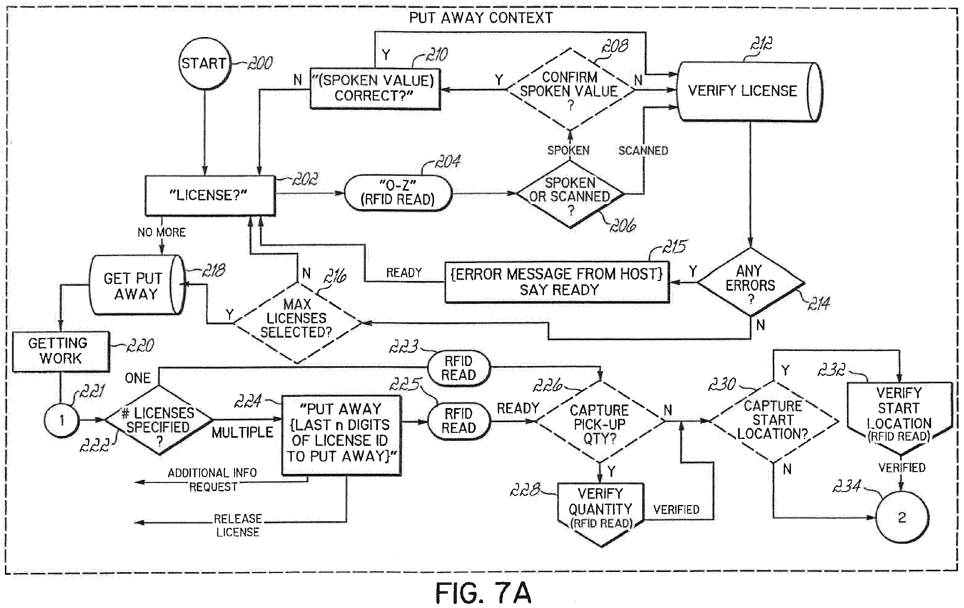

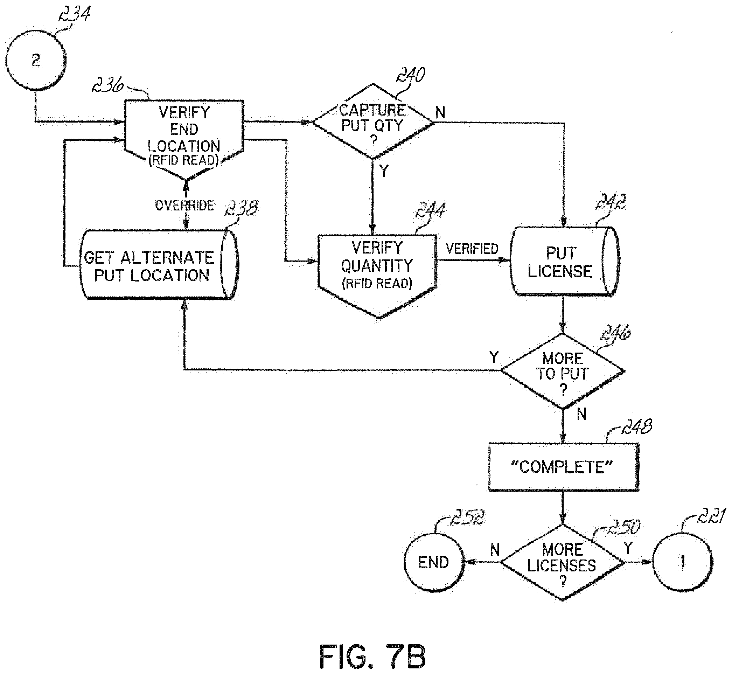

Figures 7A and 7B illustrate a flowchart for a PUT AWAY context for a voice-directed work scenario. A PUT AWAY context is directed to putting product away into a specific location after it has been received at the warehouse. For example, a PUT AWAY process is performed when a warehouse or some other facility receives items (e.g., from a truck delivery) that are to then be further warehoused and distributed. The PUT AWAY context starts at Block 200 wherein a license plate or license number for a pallet or other container with items to be PUT AWAY is obtained (Block 202). The terminal prompts the user for a container license plate or container ID, which may be provided by spoken or scanned information. As indicated by Block 204 the license may be spoken by the user or may be obtained by a context-driven RFID read in accordance with one aspect of the invention. For example, the pallet may include an RFID tag, which has its license plate number thereon. Alternatively, the user might operate another scanning or reading device, such as bar code scanner, to obtain the license plate information.

If such speaking and scanning options are available, the terminal might logically determine whether the license number information was spoken or otherwise scanned or read (Block 206). If spoken, the system may require confirmation of the spoken value (Block 208). If confirmation is required, the user, the system may prompt the user with the spoken value it obtained to determine if that value is correct (Block 210). If the spoken value was not correct, the flow returns to Block 202 and again requests license number information. If the spoken value is correct, the license number is then verified such as through the central system or another suitable database, for example. (Block 212.) Also, if the spoken value is not to be confirmed or if the license is scanned or read with a bar code scanner or RFID reader according to the invention, the license is also verified in Block 212. The central system then checks if there were any errors verifying the license and if it is a valid license (Block 214). If it is an invalid license, an error message from the central system or host system is provided to the user (Block 216). For example, the speech dialog may say "Invalid License" (215) and then prompt to get another license (202).

If the user is ready for another license, additional license information is prompted. (Block 202) If the license is valid, the system may determine, via a decision Block 216, if the maximum number of licenses (i.e., pallets/containers) has been selected to be put away. If not, additional licenses or container IDs may be obtained (Block 202). In that way, the various licenses to be put away are reserved. If the maximum number of licenses has been selected, the terminal interfaces with the central system to determine the location where to take the licensed container, such as the pallet. (Block 218) With this information obtained, the terminal then obtains further work instructions associated with the put away task (Block 220) and then begins to process the various licenses on the list, which were obtained or selected by the user.

If there is only one license, such as one pallet, to be put away, then the user proceeds with that pallet as illustrated by Block 222. That is, the license is picked up to be put away at the proper location. Alternatively, if there are multiple licenses, the system instructs the user to pick up and put away a specific license (Block 224). In either case, in accordance with one aspect of the invention, a context-driven RFID read may be made to verify the license that is picked up to be put away (Block 223 or 225). The system may also obtain additional information. For example, the pick-up quantity of items that are to be put away might be captured (Block 226). If it is desirable to make such an information capture, the quantity can be verified (Block 228). As part of that verification in the speech dialog, a context-driven RFID read may be made of the pick-up quantity or the pick-up quantity might be spoken or both. After the quantity is verified or if it is not desired to capture that quantity, the speech context proceeds. For example, the start location for the pallet, such as a specific delivery truck or delivery bay where it sits might be captured (Block 230). If it is desirable to capture the start location, the start location might be verified as with the pick-up quantity (Block 226). Start location verification (Block 232) might be handled verbally or in accordance was the invention as a context-driven RFID read, or both. That is, an RFID read would be made automatically with respect to a tag located at the start location, such as on a wall adjacent a delivery bay. As noted above, such information may be obtained from the user automatically at that point in the speech dialog without the user having to speak or prompt the RFID reader. Rather, the system device in accordance with the invention understands the context of the put away process and the speech dialog associated therewith and captures and verifies the information to that end. As noted above, not only might a context-driven RFID read be made to verify the information instead of speech but also a context-driven read might be made to validate the speech input. In either case, it is seamless to the user and does not slow the user in any way. In fact, it may speed up the user's progress by not requiring them to speak at all at certain junctures of the speech dialog.

Referring now to Figure 7B, flow continues at Block 234 for the selected license to be put away. When the user proceeds with the licensed pallet or container to the end location. That is, the licensed pallet and items thereon are put away in their proper place in the warehouse. Through the speech dialog, the user is directed to the end location. When the user arrives at the end location or the location for the put away, another context-driven read is made of the tag associated with the end location, information about the end location is spoken or both. Again, the context-driven RFID read might be automatic based upon the context of the voice dialog and may be used to provide the information instead of voice or may be used to validate the voice input. After the end location for the put away is verified, the process proceeds. Alternatively, the user might override the put away location and obtain an alternate put location from the central system or database per Block 238. If the end location is verified and all the items associated with the license are to be put in that end location, the terminal and system may capture the put quantity. (Block 240) If the put quantity is not to be captured the information regarding the container license that is put away is updated in the central system (Block 242).

Alternatively, the quantity to be put away might be captured. To that end, progress flows to Block 244 wherein the quantity is verified by context-driven RFID read, voice, or both. Once that quantity is verified, the central system is again updated with the completion of that put away task (Block 242) for the license.

In an alternative scenario, only some of the items of the licensed container might be put away at that specific end location. To that end, the quantity to be put away at that location might be verified (Block 244). After the central system is updated, a logical test might be made to determine whether there are more items on that license to put away somewhere else (Block 246). If so, an alternate put location may be obtained (Block 238). If not, then the system may indicate that the put away is complete (Block 248) and may prompt the user to determine whether there are more licenses for put away. (Block 250) If not, the put away may end (Block 252). But if there are additional licenses, process returns to Block 221 in Figure 7A to proceed with the next license for put away.

Another example is helpful in illustrating various features of the invention: In a typical order filling process, a worker might be directed to go to a specific location, such as an aisle or slot, for an order they are filling. In prior systems, they may then speak into their headset 16 and terminal 10 specific location information, such that check digits that are located at the aisle or slot that they have been directed to. As noted above, using prior systems, workers were able to memorize the check digits for a specific location, and to speak those into the terminal without actually being at the desired location. In the present invention, in addition to optional spoken check digits, an RFID tag may contain the necessary information regarding the location. That location information is automatically verified for the worker wearing terminal 10 moving proximate to an RFID tag at the directed location. For location verification, an active RFID tag might be most appropriate due to its greater range. Because the verification occurs automatically with no input from the worker, the system cannot be fooled.

Therefore, various different tasks in a voice-directed work context may be performed utilizing the benefits of the present invention wherein context-driven RFID reads are made to obtain and verify information, such as an alternative to voice input, as a supplement to voice input, or to actually verify the voice input. Such context-driven RFID reads are done automatically and seamlessly as the worker proceeds through their voice-directed tasks and are handled due to the speech context and the knowledge of the terminal regarding the speech context. That is, the reads occur at specific positions in the contextual stream of the speech dialog. Various information is therefore gathered about items handled, quantities, locations and attributes without having to be spoken by the user. In that way, the user can maintain a quick working dialog with a terminal or other device to increase the efficiency of the work directed task.

While the context-driven RFID read may be automatic, such that the terminal automatically operates the RFID reader circuitry, in an alternative embodiment, the context-driven RFID read may provide a speech prompt or other prompt to a user to tell them to selectively operate the RFID reader to do a read. That is, while the RFID reader is manually or otherwise operated to read a tag, the context of the speech dialog provides speech or signal prompts (e.g., audible signals) to the user to facilitate the context-driven read.

In various of the context-driven RFID read scenarios, information or data from an RFID tag may be used to replace, supplement or verify spoken information. Therefore, the information might, wholly or partially, supplement or be redundant to the speech dialog. In another aspect of the invention, the RFID tag read may occur automatically in the workflow context and then speech might be utilized to replace, supplement or verify the RFID tag data/information, either partially or completely, as noted above. As such, the context-driven RFID read is integrated into the speech dialog of a speech or voice terminal to work seamlessly with the speech dialog in voice-directed work scenarios. For example, the RFID tag might have basic information about a product or location, and then speech may be used in the overall work context to provide additional information to the system about the voice-directed work.

It should be readily understood that the various different item picking context, replenishment context and put away context scenarios illustrated in Figures 5A-7B are not exhaustive, and any voice directed context can benefit from the present invention. For example, in such embodiments of the invention, the contextual-based RFID read is used to supplement or provide information to the system regarding the voice-directed work. In another embodiment, the RFID tag read may provide information that corrects the spoken information. To that end, in the speech dialog, RFID data may take precedence over certain spoken information. Or, vice-versa, the speech dialog may be used to override or correct the RFID data in certain scenarios. Therefore, the RFID read data might be utilized in conjunction with the speech dialog in many ways including to supplement or complement speech information (or vice versa), verify speech information (or vice versa), to replace or correct the speech data (or vice versa) or a combination of one or more such uses.

Furthermore, the specific point within a speech dialog where the context-driven RFID read would occur is not limiting. The invention may be configured so that the speech dialog can be accompanied by a context-driven RFID read anywhere in the dialog.

In another aspect of the invention, an RFID information system or RFID reader can benefit by the speech dialog aspects of the present invention. Therefore, to supplement, verify or replace data that is traditionally obtained using an RFID reader, such as a hand-held gun, a speech dialog might be used in accordance with the invention, which combines the interoperability and the information handling aspects of speech-based systems with RFID systems.

In the present invention, the terminal portion 50 handling the exchange of information with the central system may combine all of the data/information gathered from the speech dialog and context-driven RFID reads and may transceive the combined information with the central system or a database. This may be a most efficient implementation. Alternatively, the terminal portion 50 might just send speech dialog information back and forth with the central system wile the RFID reader portion 60 handles its own communication with the central system.

In accordance with another aspect of the present invention, the RFID tags utilized on items/products and their specific locations in effect become "talking tags™" within the voice-directed work dialog. That is, the information obtained from the tags in the voice directed-work dialog are used to initiate and/or supplement a speech dialog with a user to provide information to the user about the item or location or task associated with the RFID tag.

To that end, the "talking tags™" contain information/data thereon, which, when read, initiates a speech dialog with a user, thereby giving a voice to that specific tag (hence, a "talking tag™"). More specifically, the tags are an integral part of a voice-directed work system where voice and speech are combined and are utilized to direct multiple users to perform multiple tasks. While the various examples set forth herein are directed to warehouse environment, as noted above, any voice-directed work dialog is suitable for implementing this aspect of the present invention directed to a "talking tag™". Furthermore, such talking tags further streamline the efficiency of the voice-directed work.

For example, such talking tags may be utilized in a put away context. The user may be engaging in a voice-directed dialog (or not) and may approach a specific pallet. An RFID reader captures the information or data of the talking tag and via the terminal and/or central system within the voice-directed work system, the tag is given a "voice" in order to speak to the user. That is, information/data from the tag and any tasks associated with the tag, such as a place to put the items carrying the tag, are provided to the user through a speech dialog. In one example, when the terminal engages the talking tag for a pallet, the pallet might "tell" the user to put it away at specific location. That is, a pallet of items may simply arrive on a loading dock with the talking tag thereon and a user encountering the tag may be told directly, by speech, how to process, put away or otherwise handle the pallet and item or items.

Referring to Figure 3, the terminal 10, worn by a user or mounted on equipment, might encounter tag 70. The user might operate the terminal, either by a button, or a voice command, to "read" the tag or the tag might be read automatically. The tag data from the tag is then processed by the terminal 10 and/or the central system (FIG. 2). The RFID reader 54 might communicate the data to the processing circuitry 52 of the terminal to be processed by the directly or forwarded to the central system. Alternatively, the RFID reader may communicate directly with the central system. The data may provide the necessary information, such as the location where the pallet containing the tag is to be put away. Alternatively, the tag data/information may be about the product itself. In one embodiment, the terminal or central system uses the data directly to then initiate and perform the speech dialog. Therefore, the speech portion 50 of terminal 10 directs the user how to handle the item with the "talking tag™." In an alternative scenario, the tag data may simply be a key or index to additional information about the tagged item or location. For example, the I.D. data on the tag might be used by the terminal or conveyed by terminal 10 to a database to look up more information. In any scenario, the terminal conveys information about the tag or tagged item/location to the user by speech through terminal 10. That is, the tag "talks" through the terminal based on its data. As may be appreciated, the tag, through the terminal, may tell the user various amounts of information or may direct the user, with speech, to perform a number of tasks.

For example, a user wearing or carrying a terminal 10 might pick up an item having an RFID tag. The tag is read by the RFID reader portion 60 of terminal 10. The data from tag 70 then initiates or modifies a speech dialog using speech portion 50 of the terminal. A tone, such as a beep or buzz or other audio signal, may alert the user that the tag is read and a speech dialog regarding the tagged item is forthcoming. The speech dialog may then state, to the user, what the item is and where to take it. For example, the speech dialog may say "product description: take to aisle 8, slot 24." Or the speech dialog might order a replenish operation: "product description - out of stock: take immediately to aisle 8, slot 24." Alternatively, the item might be a promotional display." If the item has an expired expiration date, the speech dialog may note: "past expiration date - take to discard area." If an item has been recalled, the speech dialog might state: "Recall item, set aside to return to manufacturer." Therefore, the present invention may use the speech dialog confined with an RFID reader and tags to control the flow of items each time a user picks up an item. The user can pick up any item and know instantaneously, through the speech dialog, what to do with the item. If the item is not recognized by its RFID data, the terminal might use a different audio tone to indicate that a read was performed, but no speech dialog might be forthcoming. The items would then have to be handled in some other fashion.

In an alternative scenario, the talking tag might provide information to the user so that they can make their own decision with respect to how to further process it. For example, all items of a particular type might need to be placed in the same area, which the user knows. Talking tags 70 then tell the user information about the items so the user can process them properly. For example, all items for a particular country or within a particular serial number range, with a particular date code or lot code might have to be processed the same way. When the tag tells the user what type of product they are handling, the user knows how to further process the product. Alternatively, speech associated with the tag may tell the user the work task (e.g., put away, move, pick, etc.), to perform with the item. Therefore, the user may work among a variety of different items having talking tags 70 and can focus in on those that have to be processed in the same way. In that scenario the talking tags™ provide individual voices to the items to be processed within a voice-directed work system. The items (i.e., their tags) effectively tell the user or worker what to do with them.

As may be appreciated, this presents a significant advantage in voice-directed work wherein multiple items and containers of items are handled. Of course, the talking tags are not limited to only such scenarios. Rather, they can have various other uses in a voice or speech dialog system, such as to inform a user of their location or otherwise provide additional information to the user about the item or area associated with the tag. In another example, if a load of items has been damaged, a talking tag might be associated with those items to thereby tell any user in the voice-directed work system that such items are to be processed for return to a manufacturer rather than to be further processed for orders. Therefore, the present invention incorporating an RFID reader within a voice-driven system provides unique benefits associated with the various aspects of the invention to further streamline item handling, worker direction, and other aspects within a voice-driven system.

In another embodiment, the talking™ tag may be part of the speech dialog to not only provide information about an item and how to further process the item, but also to gather information. For example, an item associated with a tag might talk (via the tag) with the user by prompting a speech dialog through terminal 10 and/or system 20 once the tag data is read. The speech dialog may ask the user a series of questions about the items to thereby build a database and further categorize the item. That gathered spoken information might be stored or might be used to then direct the user, by speech, how to further process the item. Therefore, while in some scenarios, the tag data immediately provides the information for the speech dialog to direct the user, in other scenarios, the tag data may just be an index or pointer to a separate database entry that has been compiled about the item. Once the item is recognized, the user might then use the speech dialog to find out more information about the item. For example, the user may ask questions about the items that are answered by terminal 10 or system 20 using the tag data to access a database. Therefore, the invention may be used to compile and later access database information, all via an indexing using RFID tag data. As noted above, the talking tag information/data might be used to verify spoken information or might be verified by spoken information. It may supplement spoken information or be supplemented by speech. It might replace the speech information or may be replaced by the speech information. Therefore, in accordance with one aspect of the invention, the RFID tag data becomes an integral part of the speech dialog in voice-directed work and streamlines the efficiency of such voice-directed work.

While a talking tag may be used to direct processing of items that are encountered outside of a planned work scenario (e.g., to handle any item that a user happens to encounter) they are also useful in a traditional voice-directed work context, such as a pick context. A worker may be directed to select or pick a number of certain items. Each of those items may have an RFID tag on them, which is read by the terminal 10 and conveyed to the system as they are picked. This not only provides verification that the proper items are being picked as noted above, but may also be used to make the item "talk" by triggering the speech dialog to tell the user about the item or request information from the user about the item. Alternatively, the boxes from which the items are picked or the pallet on which the items are located, might also include an RFID tag for verification of a particular box or pallet. Therefore, the present invention may be utilized to read one or more RFID tags associated with items being handled by a worker to verify that the proper items are being handled or to open a speech dialog about the item. Such product dialog is also completely eyes-free and hands-free for the worker handling the picked items.

The talking tags™ associated with such boxes or containers, or the individual product items themselves, are read by the wearable RFID reader 54 and processed by terminal 10 worn by the user. Without the user having to actually read labeling on a package or otherwise discern its contents, terminal 10 processes the information from the talking tag and directs the user by speech commands to move the package to a desired location or otherwise process it. To that end, the package or box of product might be completely unmarked except with an RFID tag and the user is still accurately directed to move it to the desired location or properly process it.

In an alternative use of the invention, a unique RFID tag might be used for each picked item. The RFID reader 54 would then read that unique tag for each item and the terminal system 10 is able to interface with central system 20 to verify that the proper number of items was picked. For example, if five items were ordered, RFID reader 54 might obtain information from five tags, thus indicating that five items were handled by the worker. If less is handled, the talking tag feature could alert the user to pick some additional number of items. If only four items were picked, the system will know automatically based on the RFID reader output, and the system 20 may request the additional fifth item or may prompt the worker with a voice command to speak an exception.

In still another embodiment of the present invention, the system may provide a cycle count for the central system each time a worker is near a particular location. A cycle count is a count of the items that are in a particular bin or slot, and is utilized to supply information regarding the time to replenish or reorder such items for the bin or slot. Generally, such cycle counts are done manually, which requires that the facility be shut down and that the items in each bin or slot be counted by a worker. Utilizing the present invention, which includes an RFID reader 54 in combination with a speech dialog with terminal portion 50 worn by a worker, a cycle count might be made for a particular item every time a worker is near the location of that item and the voice-directed work context desires a cycle count. For example, a cycle count might be provided for a particular slot or bin every time a worker is at that slot or bin. This provides instantaneous information and eliminates the need for hard cycle counts that were used in the past. In this way, the invention improves the overall efficiency and cost-effectiveness of the system by eliminating facility shutdowns and times scheduled for workers to provide manual hard counts. Furthermore, because of such improvements in the audits and cycle counting for particular items, the time spent replenishing those items can also be reduced due to the overall increased accuracy of the invention.

In addition to location information and product information, the present invention may also be utilized to track and to verify equipment being utilized by a worker. For example, RFID tags associated with forklifts, pallet handling equipment, or other equipment utilized within the product-handling environment, might be tracked through a wearable system, including the RFID reader 54 carried or worn by the worker. With a talking tag™ of the invention, instructions and/or warnings regarding the equipment might be spoken to the user. As such, the present invention has wide applicability to any item that may carry an RFID tag and provides a seamless and hands-free and eyes-free way of utilizing a speech interface and RFID information to handle products and the movement of actions or workers.

Figure 4 illustrates an alternative embodiment of the invention wherein the components of the invention, including the speech portion and the RFID reader portion are incorporated within a single housing 80, which is worn by a worker. The integrated and wearable terminal 10A includes a single housing, which has terminal processing circuitry 82 for handling a speech interface and an integral RFID reader 84. The RFID reader 84 operates with the processing circuitry 82 to identify, track, and verify information related to the activity of a worker and products, equipment, and other items handled by a worker. The wearable terminal 10A will also include a central system interface so that terminal 80 may interface with a central system, such as system 20 shown in Figure 2. A portable power supply, such as the battery 88, may be utilized to power all the circuitry of terminal 10A. Terminal 10A also includes appropriate antenna circuits indicated as a single Block 90 in Figure 4. However, different antenna circuits may be utilized by the RFID reader to read RFID tags, and by the central system interface of processing circuitry 82 to communicate with the central system 20. Therefore, the antenna circuits 90 will include appropriate antennas or antenna circuits to read RFID information from a tag or to provide a wireless connection between terminal 10A and the central system 20. Of course, the terminal 10 might also utilize a separate RFID reader portion that is worn, carried or fixedly mounted in the work area.

That is, while in various scenarios of the invention, it is desirable to utilize a portable, or even wearable, RFID reader as part of the user terminal, it may be desirable to use an RFID reader that is fixed at a location while the user wears or carries the portion of the terminal associated with the speech dialog. For example, an RFID reader might be mounted at a doorway, such as a delivery bay door. Then, when items are carried or transported through the door, the RFID reader would read the talking tag™ and a speech dialog would direct the user in a work task. Therefore, the present invention, in its various aspects, is not limited to portable or wearable RFID readers.

The RFID reader 54 that is operably coupled with the processing circuitry 52 in terminal 10 and carried or worn by the worker requires general proximity of the worker to their designated location to verify the proper location. As noted above, voice verification might also be utilized to further verify that the workers in the proper location handle the proper product or inventory.

The location of the worker might also be periodically tracked as they move through the place where they are working. For example, it might be desirable to find a particular worker regardless of whether they are handling a specific product. In that sense, locator RFID tags might be positioned in various locations around a facility and automatically read when the terminal 10 worn by a user passes proximate to a specific tag 70. The invention may then be used to track users no matter what their tasks and allows the central system to be able to efficiently direct manpower to handle tasks close to where a user is already located or to re-direct the user.

Generally, the proximity of the user and terminal 10, to the desired tag to be read will depend upon the range of the RFID reader 54 and whether the RFID tag 70 is an active or passive tag. Various different RFID tag technologies, as known to a person of ordinary skill in the art, may be utilized to realize the present invention. RFID tags and reader technology, based both on passive tag technology and active tag technology, are available. Passive tags usually do not require a power source and, thus, rely upon the power source generated by the signal from the RFID reader in order to generate the information, utilizing the RFID reader output. Generally, passive tags will have a shorter range (e.g., about 3 feet) and will therefore be most suitable for use on products handled by the user or in other applications where the user is physically located close to the tags. Active tags, on the other hand, contain active circuits that work with an RFID reader to provide information associated with a specific tag. As such, active tags may be used at greater distances (e.g., 5-20 feet) and may be most appropriate for location tracking, or handling of containers with multiple items, such as on slots, pallets or bins, or on shelving proximate a bin of items.

The present invention is not limited to any specific communication platform. For example, various RFID reader technologies might be utilized whereas the interface between the terminals 10, 10A, and system 20 might be provided in various formats, such as 802.11b/g WI-FI platforms. Alternatively, Blue Tooth technology might also be utilized to provide an interface between terminals 10, 10A, and a central system.

In accordance with another aspect of the present invention, terminals 10, 10A might include another wireless technology apart from the RFID reader aspects and speech interface aspects to handle other peripheral applications associated with different markets in which the invention might be utilized. For example, referring to Figure 4, the separate wireless interface component or circuit 92 might be incorporated into the housing 80 of terminal 10b for handling other peripheral applications. As such, the present invention is meant to be applicable with various communication platforms and modulation schemes, and is not limited to any particular communication scheme.

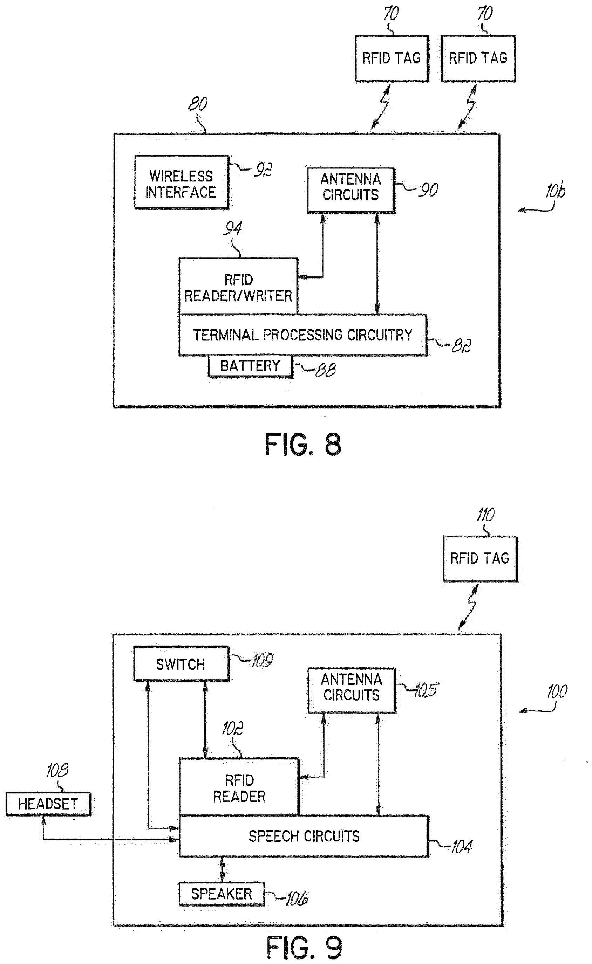

In accordance with another aspect of the present invention, utilizing a talking tag™ integral to a speech dialog with a speech terminal, as illustrated in Figure 8, the speech terminal may include an RFID reader/writer in order to create or modify the talking tag. More specifically, RFID tags, such as tag 70, might be written or encoded with information by an appropriate RFID writer or encoder. Such data might relate to a location product, user activity etc. as noted herein. To that end, the user may utilize terminal 10b to write or encode the tags with a speech dialog. The terminal may convert the speech of the user to appropriate data to be written to the tag 70 utilizing the RFID reader/writer circuitry 94. As such, if the information from a talking tag needs to be corrected or updated, the user has the ability to make such a correction or to supplement the information associated with the talking tag. In one embodiment, the spoken information provided by the user might be encoded directly to the tag. Alternatively, the data or information from the tag might be an index or address to data in the terminal or a database in the central system and such data may be written or stored on the tag accordingly. That is, the store or written data might be accessed from information in the terminal or information in the central system and might be stored as data on the tag. Therefore, with writable RFID tag 70, the user can use a speech dialog to make changes in the information associated with the talking tags, either directly on the tags, or in memory locations or data base locations that are indexed/addressed with the data from the RFID tag. To that end, terminal 10b might also be provided with a printing capability (not shown) or may interface wirelessly or otherwise with a standalone printer (not shown) to print new RFID tags.

While various terminal examples above incorporate RFID reader or reader/writer capabilities with a voice or speech terminal, the present invention has applicability to empowering an RFID reader with a speech dialog. Referring to Figure 9, an RFID reader 100 is shown for reading RFID tags. The reader 100 might be utilized to provide traditional RFID reading functions through antenna circuits 105 and tags 110, where the RFID data is then processed by conventional reader circuitry 102. But the reader might also include speech-processing circuitry 104. The speech processing circuitry 104 might be selectively engaged and operated, such as by switch 109, to provide or facilitate a speech dialog or to generate speech commands, based on the tag data, in accordance with the invention as described herein. The speech dialog may then be conveyed to the user with a headset 108 and/or an external speaker 106. The reader might also interfere with a central system through the speech circuitry block and/or appropriate processing circuitry and the antenna circuits 105.

In various of the embodiments set forth herein, and particularly those utilizing context-driven RFID reads, the control of an RFID reader might be handled by software that handles the speech dialog of the voice-directed work. In that way, the terminal understands, based upon the speech dialog, when to do the appropriate reading of data from the RFID tags. Alternatively, the user may control the reading operation. For example, the terminal may prompt the user, with speech commands, to operate the RFID reader aspects of the terminal based on the context of the speech dialog. Therefore, the present invention is not limited to automatic control of the RFID reader capabilities of the terminal, based upon the context of a speech dialog. Other control schemes will be understood by a person of ordinary skill in the art for providing a speech context-driven RFID read functionality in the invention.

While the present invention has been illustrated by a description of various embodiments and while these embodiments have been described in considerable detail, it is not the intention of the applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit of applicant's general inventive concept.

## Claims

1. A system comprising a terminal device for exchanging information with a central system, the terminal device including processing circuitry (52, 82, 104) operable for facilitating a speech dialog with a user to communicate activity information back and forth with a user for directing the user in the performance of at least one task, the speech dialog including speech outputs from the processing circuitry (52, 82, 104) to a user and speech inputs from the user to the processing circuitry (52, 82, 104) during execution of an activity associated with the at least one task, an RFID reader (54, 84, 94, 102) operable for retrieving data from an RFID tag (70, 110) with data stored thereon, the RFID reader (54, 84, 94, 102) and processing circuitry (52, 82, 104) configured for using the retrieved tag data and generating at least a portion of the speech dialog that is reflective of the tag data,
**characterized in that** the terminal further includes an RFID writer (94) configured to use the speech dialog to store data on an RFID tag (10, 70), the data being based on at least one of the speech dialog, information in the terminal or information in the central system.

2. The system of claim 1 wherein the data storing is automatic and driven by the context of the speech dialog.

3. The system of claim 1 wherein a portion of the speech dialog including speech inputs from the user is converted by the processing circuitry and stored on the RFID tag (70, 100) by the RFID writer.

4. The system of claim 1 wherein the stored tag data contains information related to the activity of the user.

5. The system of claim 1 wherein the stored data is location information related to a location of a user.

6. The system of claim 1 wherein the stored data is product information regarding a product.

7. The system of claim 3 wherein the speech inputs from the user include information for correcting or supplementing information associated with the tag data.

8. The system of claim 1 wherein the data retrieved from an RFID tag (70, 100) provides an index to additional data in the terminal device or in a central system, the RFID writer (94) configured to store the additional data on an RFID tag (70, 100).

9. A method for handling items comprising:
with a speech dialog implemented through processing circuitry (52, 82, 104) of a terminal device that exchanges information with a central system, communicating activity information back and forth with a user for directing the user in the performance of at least one task, the speech dialog including speech outputs from the processing circuitry to a user and speech inputs from the user to the processing circuitry (52, 82, 104) during execution of an activity associated with the at least one task, retrieving data with an RFID reader (54, 84, 94, 102) operable for retrieving data from an RFID tag (70, 100) with data stored thereon, the RFID reader (54, 84, 94, 102) and processing circuitry (52, 82, 104) configured for using the retrieved tag data and generating at least a portion of the speech dialog that is reflective of the tag data, **characterised by** storing data with an RFID writer (94) configured to use the speech dialog to store data on an RFID tag, being based on at least one of the speech dialog, information in the terminal or information in the central system.

10. The method of claim 9 further comprising automatically storing the data driven by the context of the speech dialog.

11. The method of claim 9 further comprising converting a portion of the speech dialog including speech inputs from the user with the processing circuitry and storing it on the RFID tag (70, 100) with the RFID writer (94).

12. The method of claim 9 wherein the stored tag data contains information related to the activity of the user.

13. The method of claim 9 wherein the stored data is one of location information related to a location of a user or information regarding a product.

14. The method of claim 11 wherein the speech inputs from the user include information for correcting or supplementing information associated with the tag data.

15. The method of claim 9 wherein the data retrieved from an RFID tag (70, 100) provides an index to additional data in the terminal device or in a central system, the RFID writer (94) configured to store the additional data on an RFID tag (70, 100).

## Patentansprüche

1. System, umfassend eine Endgerätevorrichtung zum Austauschen von Informationen mit einem zentralen System, wobei die Endgerätevorrichtung Verarbeitungsschaltungen (52, 82, 104) enthält, die funktionsfähig zum Erleichtern eines Sprachdialogs mit einem Benutzer sind, um Aktivitätsinformationen mit einem Benutzer hin und her zu kommunizieren, um den Benutzer bei der Durchführung mindestens einer Aufgabe anzuleiten, wobei der Sprachdialog Sprachausgänge von den Verarbeitungsschaltungen (52, 82, 104) zu einem Benutzer und Spracheingänge von dem Benutzer zu den Verarbeitungsschaltungen (52, 82, 104) während der Ausführung einer mit der mindestens einen Aufgabe assoziierten Aktivität enthält, eine RFID-Lesevorrichtung (54, 84, 94, 102), funktionsfähig zum Abrufen von Daten von einem RFID-Etikett (70, 110) mit darauf gespeicherten Daten, wobei die RFID-Lesevorrichtung (54, 84, 94, 102) und die Verarbeitungsschaltungen (52, 82, 104) zum Verwenden der abgerufenen Etikettdaten und Erzeugen mindestens eines Teils des Sprachdialogs, der die Etikettdaten reflektiert, konfiguriert sind, **dadurch gekennzeichnet, dass** das Endgerät ferner eine RFID-Schreibvorrichtung (94) enthält, die konfiguriert ist, den Sprachdialog zu verwenden, um Daten in einem RFID-Etikett (10, 70) zu speichern, wobei die Daten auf mindestens einem des Sprachdialogs, Informationen in dem Endgerät oder Informationen in dem zentralen System basieren.

2. System nach Anspruch 1, wobei das Speichern der Daten automatisch erfolgt und von dem Kontext des Sprachdialogs angesteuert wird.

3. System nach Anspruch 1, wobei ein Teil des Sprachdialogs, der Spracheingänge von dem Benutzer enthält, von den Verarbeitungsschaltungen umgewandelt und von der RFID-Schreibvorrichtung in dem RFID-Etikett (70, 100) gespeichert wird.

4. System nach Anspruch 1, wobei die gespeicherten Etikettdaten Informationen enthalten, die zu der Aktivität des Benutzers in Beziehung stehen.

5. System nach Anspruch 1, wobei die gespeicherten Daten Ortsinformationen sind, die zu einem Ort eines Benutzers in Beziehung stehen.

6. System nach Anspruch 1, wobei die gespeicherten Daten Produktinformationen hinsichtlich eines Produkts sind.

7. System nach Anspruch 3, wobei die Spracheingänge von dem Benutzer Informationen zum Korrigieren oder Ergänzen von Informationen, die mit den Etikettdaten assoziiert sind, enthalten.

8. System nach Anspruch 1, wobei die von einem RFID-Etikett (70, 100) abgerufenen Daten einen Index zu zusätzlichen Daten in der Endgerätevorrichtung oder in einem zentralen System bereitstellen, wobei die RFID-Schreibvorrichtung (94) konfiguriert ist, die zusätzlichen Daten in einem RFID-Etikett (70, 100) zu speichern.

9. Verfahren zum Handhaben von Elementen, umfassend:
Kommunizieren, mit einem Sprachdialog, implementiert durch Verarbeitungsschaltungen (52, 82, 104) einer Endgerätevorrichtung, die Informationen mit einem zentralen System austauscht, von Aktivitätsinformationen hin und her mit einem Benutzer zum Anleiten des Benutzers bei der Ausführung mindestens einer Aufgabe, wobei der Sprachdialog Sprachausgänge von den Verarbeitungsschaltungen zu einem Benutzer und Spracheingänge von dem Benutzer zu den Verarbeitungsschaltungen (52, 82, 104) während der Ausführung einer Aktivität, die mit der mindestens einen Aufgabe assoziiert ist, enthält, Abrufen von Daten mit einer RFID-Lesevorrichtung (54, 84, 94, 102), die funktionsfähig zum Abrufen von Daten von einem RFID-Etikett (70, 100) mit darauf gespeicherten Daten ist, wobei die RFID-Lesevorrichtung (54, 84, 94, 102) und die Verarbeitungsschaltungen (52, 82, 104) zum Verwenden der abgerufenen Etikettdaten und Erzeugen mindestens eines Teils des Sprachdialogs, der die Etikettdaten reflektiert, konfiguriert sind, **gekennzeichnet durch** Speichern von Daten mit einer RFID-Schreibvorrichtung (94), die konfiguriert ist, den Sprachdialog zu verwenden, um Daten in einem RFID-Etikett zu speichern, basierend auf mindestens einem des Sprachdialogs, der Informationen in dem Endgerät oder den Informationen in dem zentralen System.

10. Verfahren nach Anspruch 9, ferner umfassend, die Daten automatisch zu speichern, angesteuert durch den Kontext des Sprachdialogs.

11. Verfahren nach Anspruch 9, ferner umfassend, einen Teil des Sprachdialogs, der Spracheingänge von dem Benutzer enthält, mit den Verarbeitungsschaltungen umzuwandeln und ihn mit der RFID-Schreibvorrichtung (94) in dem RFID-Etikett (70, 100) zu speichern.

12. Verfahren nach Anspruch 9, wobei die gespeicherten Etikettdaten Informationen enthalten, die zu der Aktivität des Benutzers in Beziehung stehen.

13. Verfahren nach Anspruch 9, wobei die gespeicherten Daten eines von Ortsinformationen, die zu einem Ort eines Benutzers in Beziehung stehen, oder Informationen hinsichtlich eines Produkts sind.

14. Verfahren nach Anspruch 11, wobei die Spracheingänge von dem Benutzer Informationen zum Korrigieren oder Ergänzen von Informationen, die mit den Etikettdaten assoziiert sind, enthalten.

15. Verfahren nach Anspruch 9, wobei die von einem RFID-Etikett (70, 100) abgerufenen Daten einen Index zu zusätzlichen Daten in der Endgerätevorrichtung oder in einem zentralen System bereitstellen, wobei die RFID-Schreibvorrichtung (94) konfiguriert ist, die zusätzlichen Daten in einem RFID-Etikett (70, 100) zu speichern.

## Revendications

1. Système comprenant un dispositif terminal pour échanger des informations avec un système central, le dispositif terminal comprenant un circuit de traitement (52, 82, 104) servant à faciliter un dialogue vocal avec un utilisateur pour communiquer des informations d'activité dans les deux sens avec un utilisateur pour diriger l'utilisateur dans l'exécution d'au moins une tâche, le dialogue vocal comprenant des sorties vocales du circuit de traitement (52, 82, 104) adressées à un utilisateur et des entrées vocales de l'utilisateur adressées au circuit de traitement (52, 82, 104) lors de l'exécution d'une activité associée à ladite au moins une tâche, un lecteur RFID (54, 84, 94, 102) servant à récupérer des données à partir d'une étiquette RFID (70, 110) avec des données stockées sur celle-ci, le lecteur RFID (54, 84, 94, 102) et le circuit de traitement (52, 82, 104) étant configurés pour utiliser les données d'étiquette récupérées et générer au moins une partie du dialogue vocal qui reflète les données d'étiquette,
**caractérisé en ce que** le terminal comprend en outre un dispositif d'écriture RFID (94) configuré pour utiliser le dialogue vocal pour stocker des données sur une étiquette RFID (10, 70), les données étant basées sur au moins l'un du dialogue vocal, d'informations dans le terminal ou d'informations dans le système central.

2. Système selon la revendication 1, dans lequel le stockage de données est automatique et commandé par le contexte du dialogue vocal.

3. Système selon la revendication 1, dans lequel une partie du dialogue vocal comprenant des entrées vocales de l'utilisateur est convertie par le circuit de traitement et stockée sur l'étiquette RFID (70, 100) par le dispositif d'écriture RFID.

4. Système selon la revendication 1, dans lequel les données d'étiquette stockées contiennent des informations relatives à l'activité de l'utilisateur.

5. Système selon la revendication 1, dans lequel les données stockées sont des informations de localisation associées à une localisation d'un utilisateur.

6. Système selon la revendication 1, dans lequel les données stockées sont des informations de produit concernant un produit.

7. Système selon la revendication 3, dans lequel les entrées vocales de l'utilisateur comprennent des informations pour corriger ou compléter des informations associées aux données d'étiquette.

8. Système selon la revendication 1, dans lequel les données récupérées à partir d'une étiquette RFID (70, 100) fournissent un index pour des données supplémentaires dans le dispositif terminal ou dans un système central, le dispositif d'écriture RFID (94) étant configuré pour stocker les données supplémentaires sur une étiquette RFID (70, 100).

9. Procédé de manipulation d'objets comprenant de :
avec un dialogue vocal mis en oeuvre par un circuit de traitement (52, 82, 104) d'un dispositif terminal qui permet d'échanger des informations avec un système central, communiquer des informations d'activité dans les deux sens avec un utilisateur pour diriger l'utilisateur dans l'exécution d'au moins une tâche, le dialogue vocal comprenant des sorties vocales du circuit de traitement adressées à un utilisateur et des entrées vocales de l'utilisateur adressées au circuit de traitement (52, 82, 104) lors de l'exécution d'une activité associée à ladite au moins une tâche, récupérer des données avec un lecteur RFID (54, 84, 94, 102) servant à récupérer des données à partir d'une étiquette RFID (70, 100) avec des données stockées sur celle-ci, le lecteur RFID (54, 84, 94, 102) et le circuit de traitement (52, 82, 104) étant configurés pour utiliser les données d'étiquette récupérées et générer au moins une partie du dialogue vocal qui reflète les données d'étiquette, **caractérisé par** le stockage de données avec un dispositif d'écriture RFID (94) configuré pour utiliser le dialogue vocal pour stocker des données sur une étiquette RFID, lesquelles étant basées sur au moins l'un du dialogue vocal, d'informations dans le terminal ou d'informations dans le système central.

10. Procédé selon la revendication 9, comprenant en outre de stocker automatiquement les données commandées par le contexte du dialogue vocal.

11. Procédé selon la revendication 9, comprenant en outre de convertir une partie du dialogue vocal comprenant des entrées vocales de l'utilisateur avec le circuit de traitement et de la stocker sur l'étiquette RFID (70, 100) avec le dispositif d'écriture RFID (94).

12. Procédé selon la revendication 9, dans lequel les données d'étiquette stockées contiennent des informations relatives à l'activité de l'utilisateur.

13. Procédé selon la revendication 9, dans lequel les données stockées sont les unes d'informations de localisation associées à une localisation d'un utilisateur ou d'informations concernant un produit.

14. Procédé selon la revendication 11, dans lequel les entrées vocales de l'utilisateur comprennent des informations pour corriger ou compléter des informations associées aux données d'étiquette.

15. Procédé selon la revendication 9, dans lequel les données récupérées à partir d'une étiquette RFID (70, 100) fournissent un index pour des données supplémentaires dans le dispositif terminal ou dans un système central, le dispositif d'écriture RFID (94) étant configuré pour stocker les données supplémentaires sur une étiquette RFID (70, 100).
